# EUROPEAN PATENT APPLICATION

(11) **EP 2 003 914 A1**
(43) Date of publication of application: **17.12.2008**
(21) Application number: 07011457.4
(22) Date of filing: 12.06.2007
(51) Int. Cl.: H04Q 7/38, H04Q 7/36

(54) **Method for enabling the determination of a cell in which a mobile terminal is located among a group of cells of a wireless cellular telecommunication network**

(71) Applicant: Mitsubishi Electric Information Technology Centre Europe B.V., 1119 NS Schiphol Rijk (NL); MITSUBISHI ELECTRIC CORPORATION, Chiyoda-ku Tokyo 100-8310 (JP)
(72) Inventor: Voyer, Nicolas, 35708 Rennes Cedex 07 (FR); Bonneville, Hervé, 35708 Rennes Cedex 07 (FR)
(74) Representative: Maillet, Alain

(57) **Abstract**

The present invention concerns a method for enabling the determination of a cell in which a mobile terminal is located among a group of cells of a wireless cellular telecommunication network. Each cell of a group of cells is managed by a base station. The method comprises the steps of:
- detecting the presence of the mobile terminal in the group of cells,
- enabling the mobile terminal to transfer data to at least a part of the base stations which manage a cell of the group of cells,
- receiving data from the mobile terminal through a base station which manages one cell of the group of cells,
- determining the cell managed by the base station through which the data are received as the cell in which the mobile terminal is located.

## Description

The present invention relates to a method for enabling the determination of a cell in which a mobile terminal is located among a group of cells of a wireless cellular telecommunication network.

Classical wireless cellular telecommunication networks are composed of numerous base stations which cover individually one or multiple cells.

A cell is an area where a reference signal broadcasted by one base station is received above a given threshold. Each base station is capable to identify plural mobile terminals, as the base station allocates to each mobile terminal located in its cell a short identifier that is unique in the cell.

Neighbour cells of base stations have different identifiers. Each base station broadcasts the identifier of the cell it manages so as to avoid any ambiguity of the origin of the signals when a mobile terminal detects signals transferred by different base stations.

When a mobile terminal moves from one cell to another cell, it can then measure the signal of the other cell, read the identifier of the cell, and inform the network about this. The network can then prepare a handover, so that signals transferred to or received from the mobile terminal are carried by the base station which manages the newly discovered cell, rather than from the base station which manages the previous cell the mobile terminal was located in.

The above mcntioned handover mechanism is known under the name MAHO standing for Mobile Assisted Handover.

That mechanism is optimised if each base station broadcasts, in the cell it manages, a list of neighbour cell identifiers to the mobile terminals located in its cell.

MAHO system was initially developed for the first generations of wireless cellular telecommunication networks, which are mainly composed of macro-cells, i.e. large cells that covers multiple tens of km².

With large size cells, the list of neighbour cells that is broadcasted by the base station in the cell it manages has a reasonable size. The mobile terminals can focus their mcasurement and reporting efforts only on the meaningful cells.

Today, smaller size cells are introduced. These cells are named micro-cells, pico-cells, femto-cells. MAHO system is also used for these cells.

Nowadays, third generation of wireless cellular telecommunication networks is typically built with hierarchical cell structure (HCS). Some frequencies are devoted to high velocity mobile terminals for which macro-cells are preserved; some other frequencies are devoted to low velocity and/or high data rate mobile terminals for which pico-cells are used.

Micro-cells, pico-cells, femto-cell are cells of base stations which may be installed into homes independently from each other. As example, these base stations can be installed by the occupants of the homes without considering if there are some neighbour cells or if cells overlap each other.

Such unorganized installation of base stations makes difficult to allocate different cell identifiers to neighbour cells.

When pico-cells and micro-cells use the same frequencies, the cells typically have to face a much bigger number of neighbour cells. As the number of neighbour cells increases, the size of the list of neighbour cells increases also. Such increase of the size of the list of neighbour cells consumes the wireless resources and the mobile terminals have to scan more signals. As a result, the mobile terminals consume more electric power and the measurements take longer time.

The aim of the invention is therefore to propose a method and a device, which enable to determine in which cell a mobile terminal is located among a group of neighbour cells having the same allocated cell identifier. The present invention aims also to limit the size of the list of identifiers of neighbour cells.

To that end, the present invention concerns a method for enabling the determination of a cell in which a mobile terminal is located among a group of cells of a wireless cellular telecommunication network, each cell of a group of cells being managed by a base station, characterised in that the method comprises the steps of:
- detecting the presence of the mobile terminal in the group of cells,
- enabling the mobile terminal to transfer data to at least a part of the base stations which manage a cell of the group of cells,
- receiving data from the mobile terminal through one base station which manages one cell of the group of cells,
- determining the cell managed by the base station through which the data are received as the cell in which the mobile terminal is located.

The present invention concerns also a device for enabling the determination of a cell in which a mobile terminal is located among a group of cells of a wireless cellular telecommunication network, each cell of a group of cells being managed by a base station, characterised in that the device for enabling the determination of a cell comprises:
- means for detecting the presence of the mobile terminal in the group of cells,
- means for enabling the mobile terminal to transfer data to at least a part of the base stations which manage a cell of the group of cells,
- means for receiving data from the mobile terminal through one base station which manages one cell of the group of cells,
- means for determining the cell managed by the base station through which the data are received as the cell in which the mobile terminal is located.

Thus, it is possible to determine in which cell of the group of cells the mobile terminal is locatcd, even if all the cells in the group of cells have the same allocated cell identifier.

According to a particular feature, data are received from the mobile terminal through plural base stations and the method comprises further step of selecting, according to a criterion, one base station among the plural base stations through which data are received as the base station which manages the cell in which the mobile terminal is located.

According to a particular feature, the base station is selected as the less loaded base station among the at least one base station through which the data are received.

Thus, the capacity that can be assigned to the transfer of data from/to the mobile terminal is maximised, and handover can be realised scamless.

According to a particular feature, the base station is selected as the base station through which the data are received with best radio quality among the at least one base station through which the data are received.

Thus, the radio quality of transfer of data from/to the mobile terminal is maximised, and handover can be realised seamless.

According to a particular feature, each base station managing a cell of the group of cells transfers in the cell the base station manages a signal representative of information identifying the same cell.

Thus, the same cell identifier can be allocated to adjacent cells. As the number of information identifying cells is reduced, the size of lists of neighbour cells is reduced.

According to a particular feature, the base stations managing cells of the group of cells are associated to a controller and the method is executed by the controller.

Thus, the controller can centralise information enabling the mobile terminal to transfer data to each base station which manages a cell of the group of cells. Conflicts between mobile terminals for the transmission of data can be solved.

Thus, the virtual cell formed by the group of cells is seen by other base stations as controlled by one single virtual base station. Adding femto base stations within the virtual cell does not affect the other base stations. The operation of the wireless cellular telecommunication network can, more easily cope with the emergence of numerous numbers of femto base stations.

According to a particular feature, the mobile terminal is detected by receiving a handover command message from another base station which manages one cell which does not belong to the group of cells and the message comprises the information identifying the cell transferred in each cell of the group of cells.

Thus, the group of cells is seen as one virtual cell by the other base station. The number of neighbour cells of the cell managed by the other base station is reduced. The other base station can help mobile terminals to realise handover with numerous neighbour femto base stations. The other base station needs not be reconfigured when a neighbour femto base station is added in the wireless cellular telecommunication network.

Thus, mobile terminal can realise effective handover without service interruption when it moves between the cells controlled by the other base station to one of the cell of the group of cells controlled by the controller.

According to a particular feature, the controller determines a set of base stations which manage cells of the group of cells, transfers data intended for the mobile terminal to each base station of the set of base stations and the base station through which data are received from the mobile terminal is one base station of the set of base stations.

Thus, the mobile terminal can receive data prior than the cell in which it is located is determined. Interruption of ongoing communication is then avoided.

According to a particular feature, the set of base stations is determined according to a mobility probability between the cell managed by the other base station and each cell in the group of cells, the value of the mobility probability being computed from previous handovers executed from the other base station and the cells of the group of cells and/or according to location information of the cell managed by the base station which transferred the handover command message and cells of the group of cells.

Thus, the determination of the set of base stations is accurate.

As the size of the set can be minimised, the capacity degradation due to simultaneous transmission of data intended for the mobile terminals by all the base stations in set, can be minimised. The level of signalling between the controller and each base station controlled by the controller can also be minimised.

According to a particular feature, the set of base stations is determined according to the access rights of the mobile terminal on each base station managing a cell of the group of cells.

Thus, the determination of the set of base stations is accurate.

As the size of the set can be minimised, the capacity degradation due to simultaneous transmission of data intended for the mobile terminals by all the base stations in set, can be minimised. The level of signalling between the controller and each base station controlled by the controller can also be minimised.

According to a particular feature, the mobile terminal is enabled to transfer data to at least a part of the base stations which manage a cell of the group of cells by allocating an available identifier to the mobile terminal which uniquely identifies the mobile terminal in at least the group of cells.

Thus, data flows of two different mobile terminals present in the group of cells can not be confused, as base stations identifies each data flow with different identifiers of mobile terminals.

According to a particular feature, the mobile terminal is enabled to transfer data to at least a part of the base stations which manage a cell of the group of cells by:
- setting up a connection for the mobile terminal with each base station of the set of base stations,
- setting up a connection for the mobile terminal with an access gateway,
- transferring a handover response message to the base station which transferred the handover command message.

According to a particular feature, when data are received from the mobile terminal through the base station, the controller updates at least one mobility probability value and releases the connection for the mobile terminal with at least one base station of the set of base stations, the at least one base station being a base station through which data are not transferred by the mobile terminal.

Thus, the connection is released and frees some resources of the network, which can be reassigned to other mobile terminals. The mobility probability value better reflects the statistics of mobility between the cell managed by the other base station and the cell of the base station. It can lead to better accuracy of determined set of base stations for other mobile terminals.

According to a particular feature, the controller receives a message from the mobile terminal through the base station which manages the cell in which the mobile terminal is located, the message indicating that the mobile terminal is entering in an idle mode, releases the connection for the mobile terminal with at least the base station through which the message is transferred by the mobile terminal, releases the connection for the mobile terminal with the access gateway, and sets the identifier allocated to the mobile terminal as available.

Thus, the mobile terminal can enter in idle mode in a virtual cell seamlessly. The procedure to enter in idle mode is the same as when it enters in idle mode in a classical cell, as far as the mobile terminal and the access gateway are concerned.

According to a particular feature, the controller:
- receives a message from the base station which manages the cell in which the mobile terminal is located, the message indicating that the mobile terminal is moving to a cell which does not belong to the group of cells,
- transfers a handover command message to the base station which manages the cell which does not belong to the group of cells,
- releases the connection for the mobile terminal with at least the base station which transferred the message indicating that the mobile terminal is moving to the cell which does not belong to the group of cells,
- releases the connection for the mobile terminal with the access gateway,
- sets the identifier allocated to the mobile terminal as available.

Thus, mobile terminal can realise effective handover without service interruption when it moves between the virtual cell and a cell which does not belong to the group of cells controlled by the controller. The procedure to realise handover is unmodified, as far as the mobile terminal, the base station controlling the other cell and the access gateway are concerned.

According to a particular feature, the controller:
- receives a message from the base station which manages the cell in which the mobile terminal is located, the message indicating that the mobile terminal is moving to a cell which belongs to the group of cells,
- determines another set of base stations which manage cells of the group of cells,
- transfers data intended for the mobile terminal to each base station of the other set of base stations,
- receives data from the mobile terminal through one base station of the other set of base stations,
- determines the cell managed by the base station through which the data are received as the cell in which the mobile terminal is located.

Thus, the data intended for the mobile terminal are transferred only through each base station of the other set of base stations, which can be determined as smaller than the set of base stations which manages cell of the group of cells. The capacity of the backhaul network is saved.

According to a particular feature, the mobile terminal is detected by receiving a message from the base station which manages a cell of the group of cells, the message comprising information indicating that the mobile terminal enters in an active mode in one cell of the group of cell.

Thus, when a mobile terminal enters in active mode in the group of cells sharing a same cell identifier, the cell through which data are received from the mobile terminal is located is directly identified as the one in which the mobile is located.

According to a particular feature, the mobile terminal is enabled to transfer data to at least a part of the base stations which manage a cell of the group of cells by allocating an available identifier to the mobile terminal which uniquely identifies the mobile terminal in at least the group of cells.

Thus, the data flow of the mobile terminal can not be confused with the data flow of other mobile terminal which is located in a cell of the group of cells sharing the same cell identifier.

According to a particular feature, the mobile terminal is enabled to transfer data to at least a part of the base stations which manage a cell of the group of cells by:
- setting up a connection for the mobile terminal with the base station which transferred the message,
- setting up a connection for the mobile terminal with an access gateway.

Thus, the data transferred by the mobile terminal in one cell of the group of cells can be routed to the access gateway in the same way as if it was coming from a classical cell.

According to still another aspect, the present invention concerns a computer program which can be directly loadable into a programmable device, comprising instructions or portions of code for implementing the steps of the method according to the invention, when said computer program is executed on a programmable device.

Since the features and advantages, related to the computer program, are the same as those set out above related to the method and device according to the invention, they will not be repeated here.

The characteristics of the invention will emerge more clearly from a reading of the following description of an example embodiment, the said description being produced with reference to the accompanying drawings, among which :
Fig. 1 is a diagram representing the architecture of a wireless cellular telecommunication network in which the present invention is implemented;
Fig. 2 is a block diagram of a controller according to the present invention;
Figs. 3a and 3b depict an algorithm executed by the controller according to the present invention.

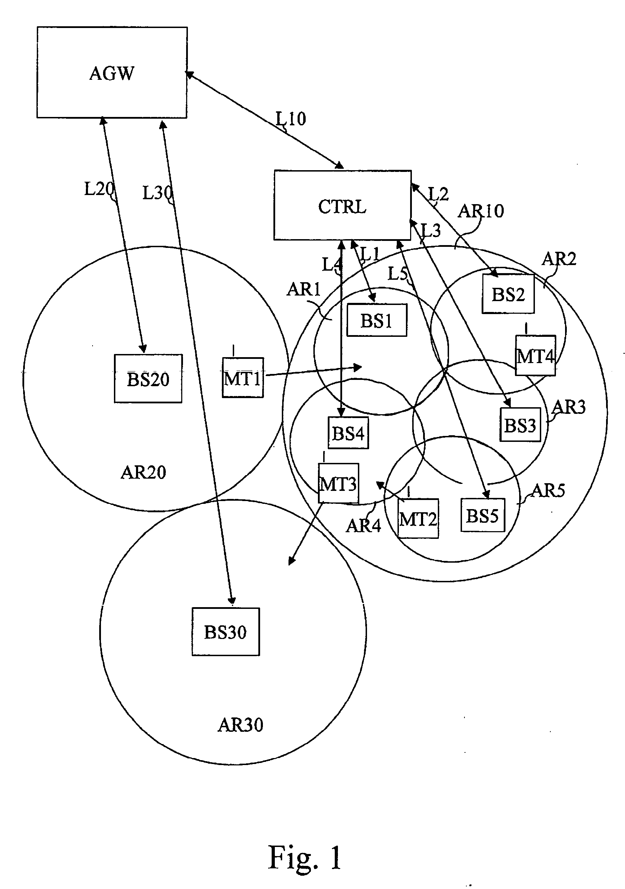

Fig. 1 is a diagram representing the architecture of a wireless cellular telecommunication network in which the present invention is implemented.

In the cellular telecommunication network, an access gateway AGW is connected to a plurality of base stations BS20 and BS30 and to a controller CTRL through a telecommunication network. The telecommunication network is a dedicated wired network or a public network like a public switched network or an IP based network or a wireless network or an Asynchronous Transfer Mode network or a combination of above cited networks.

The access gateway AGW is connected to the base station BS20 through a link L20, the access gateway AGW is connected to the base station BS30 through a link L30 and the access gateway AGW is connected to the controller CTRL through a link L10.

The telecommunication network enables also the base stations BS20 and BS30, the controller CTRL to be connected together and enables the transfer of messages and of information between the base stations BS20 and BS30, the controller CTRL or between the base stations BS20 and BS30, the controller CTRL and the access gateway AGW.

The base stations BS20 and BS30 are able to transfer and/or receive signals or messages through at least one respective area AR20 and AR30 they respectively manage. The areas AR20 and AR30 are named cells in wireless cellular telecommunication networks. The cell AR20 is identified by an identifier which is different from each identifier identifying a cell AR which is located in the vicinity of the cell AR20. The cell AR30 is identified by an identifier which is different from each identifier identifying a cell AR which is located in the vicinity of the area AR30.

Each base station BS20 and BS30 transfers in its respective cell AR20 and AR30, the identifier of the cell AR it manages on a Broadcast Control Channel (BCCH).

As the cells AR20 and AR30 have different identifiers, it is possible, for a mobile terminal MT or for any telecommunication device of the wireless cellular telecommunication network, to uniquely identify the cell AR in which a mobile terminal MT is located as it can detect the signals in the Broadcast Control Channel.

In the Fig. 1, only two base stations BS10 and BS20 are shown for the sake of clarity but the wireless cellular telecommunication network comprises a more important number of base stations BS.

Another area AR10 is shown in the Fig. 1. The area AR10 is composed of plural areas AR1 to AR5 managed by respective base stations BS1 to BS5. The areas AR1 to AR5 are named cells AR in wireless cellular telecommunication networks.

The base station BS1 transfers and/or receives signals or messages through the cell AR1 it manages, the base station BS2 transfers and/or receives signals or messages through the cell AR2 it manages, the base station BS3 transfers and/or receives signals or messages through the cell AR3 it manages, the base station BS4 transfers and/or receives signals or messages through the cell AR4 it manages and the base station BS5 transfers and/or receives signals or messages through the cell AR5 it manages.

The cells AR1 to AR5 which compose the area AR10 have the same identifier. That identifier is different from each identifier identifying a cell AR, like the cell . AR20 or the cell AR30, which is located in the vicinity of the area AR10.

Each base station BS1 to BS5 transfers in its respective cell AR1 to AR5 it manages the identifier of the cell AR on a Broadcast Control Channel (BCCH).

In the Fig. 1, only five base stations BS1 to BS5 and cells AR1 to AR5 are shown for the sake of clarity but the area AR10 comprises a more important number of cells AR and of base stations BS.

In the Fig.1, each base station BS1 to B5 is shown to manage only one cell AR, but it has to be noted here that each base station BS may manage a more important number of cells AR

The cells AR1 to AR5 are as example and in a non limitative way, micro-cells, pico-cells or femto-cells.

The base stations BS1 to BS5 are as example and in a non limitative way, micro base stations, pico base stations or femto base stations.

Each base station BS1 to BS5 is controlled by the controller CTRL.

The controller CTRL is considered by the base stations BS20 and BS30 as a base station BS which transfers and/or receives signals through the area AR10. The controller CTRL controls in fact, as it will be disclosed hereinafter, the base stations BS1 to BS5 which transfer and/or receive signals through their respective cell AR1 to AR5. The controller CTRL is then, for the base stations BS20 and BS30, a virtual base station BS which transfers and/or receives signals through a virtual cell AR10.

When a mobile terminal MT is located in the virtual cell AR10, the mobile terminal MT can not identify, using the identifier of the cells AR1 to AR5 transferred in the Broadcast Control Channel, in which cell AR1 to AR5 the mobile terminal MT is located. When a mobile terminal MT is entering in the virtual cell AR10, the mobile terminal MT can not identify, using the identifier of the cells AR1 to AR5 transferred in the Broadcast Control Channel, in which cell AR1 to AR5 the mobile terminal MT is entering. As all the cells AR1 to AR5 share the same identifier, that identifier is considered as the identifier of the virtual cell AR10.

The controller CTRL is linked to the base stations BS1 to BS5 through a telecommunication network. The telecommunication network is a dedicated wired network or a public network like a public switched network or an IP based network or a wireless network or an Asynchronous Transfer Mode network or a combination of above cited networks.

The controller CTRL is linked to the base station BS1 through a link L1, the controller CTRL is linked to the base station BS2 through a link L2, the controller CTRL is linked to the base station BS3 through a link L3, the controller CTRL is linked to the base station BS4 through a link L4 and the controller CTRL is linked to the base station BS5 through a link L5.

Each link L1 to L5 enables, for each mobile terminal MT comprised in the virtual cell AR10, the setup of a connection dedicated to the mobile terminal MT if needed.

It has to be noted here that only one virtual cell AR10 is shown in the Fig. 1 for the sake of clarity but the controller CTRL may have plural virtual cells.

Only one controller CTRL is shown in the Fig. 1 but the wireless cellular telecommunication network may comprise a more important number of controllers.

In a variant, the controller device CTRL is part of the base station BS20, which is viewed by other base station BS30 and access gateway AGW as one base station BS controlling two cells AR20 and AR10, and the links L 10 and L20 are seen as one link L10.

In the Fig. 1, four mobile terminals MT1 to MT4 are shown. The mobile terminal MT1 is located in the cell AR20 of the base station BS20 and is moving into the cell AR1 of the virtual cell AR10 controlled by the controller CTRL.

The mobile terminal MT2 is moving from the cell AR5 to the cell AR4 of the virtual cell AR10 controlled by the controller CTRL.

The mobile terminal MT3 is moving from the cell AR4 of the virtual cell AR10 controlled by the controller CTRL to the cell AR30 of the base station BS30.

The mobile terminal MT4 is located in the cell AR2 of the virtual cell AR10 controlled by the controller CTRL and is moving from an idle mode to an active mode.

Only four mobile terminals MT are shown in the Fig. 1, but we can understand that a more important number of mobile terminals MT are in the wireless cellular telecommunication network.

When the mobile terminal MT is located in a cell AR, the mobile terminal MT can establish or receive or continue a communication through the base station BS which manages the cell AR in which mobile terminal MT is located or can receive a paging notification message.

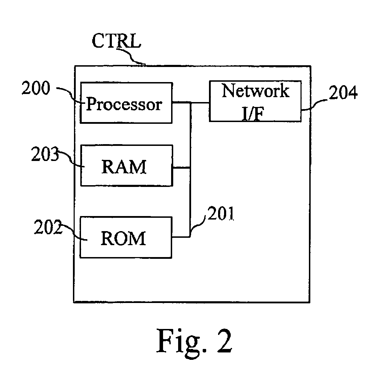

Fig. 2 is a block diagram of a controller according to the present invention.

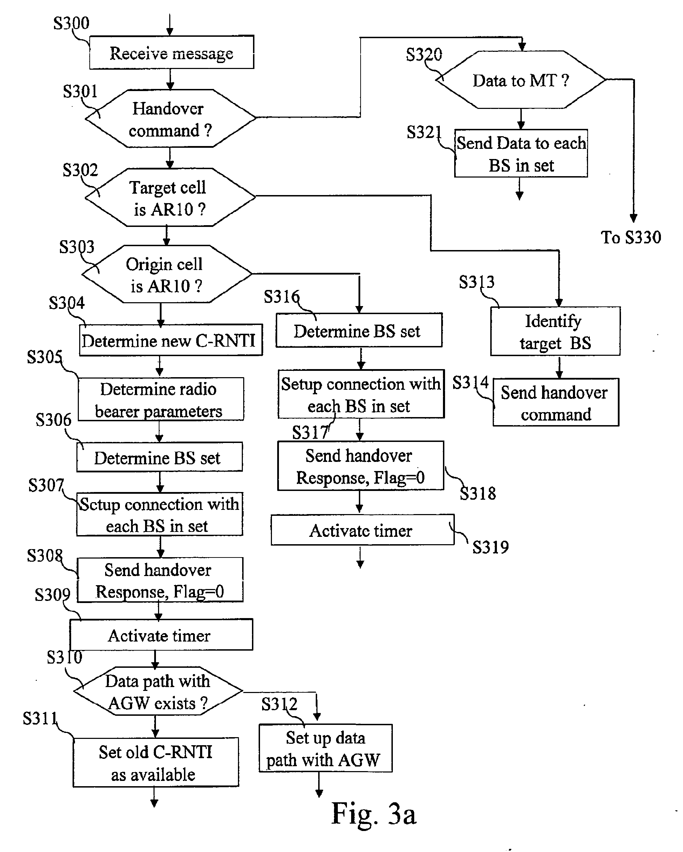

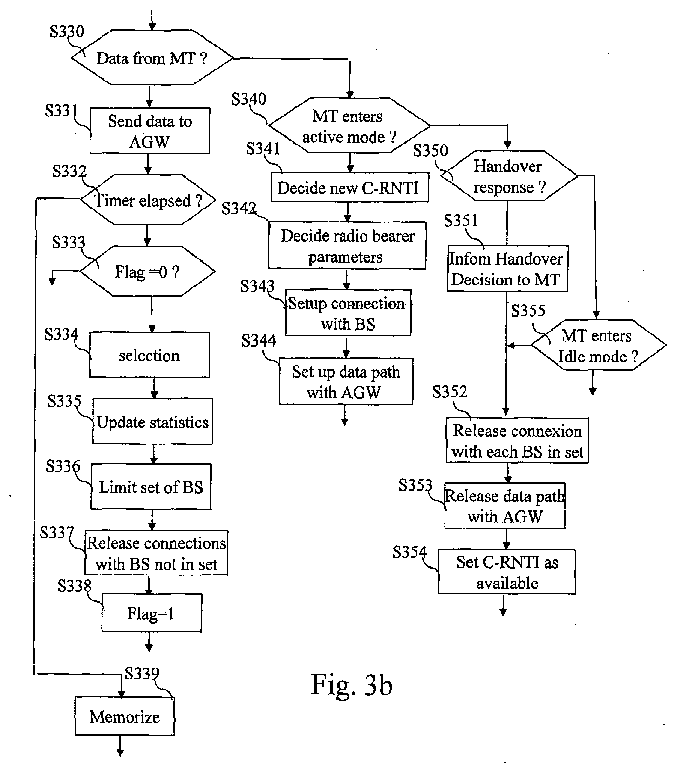

The controller CTRL has, for example, an architecture based on components connected together by a bus 201 and a processor 200 controlled by the program as disclosed in the Figs. 3a and 3b.

The bus 201 links the processor 200 to a read only memory ROM 202, a random access memory RAM 203 and a network interface 204.

The memory 203 contains registers intended to receive variables, information identifying the cells AR, like the cells AR20 and AR30 which are known as neighbour of the virtual cell AR10, the identifiers of the base stations BS which manage these cells AR, and the instructions of the program related to the algorithm as disclosed in the Figs. 3a and 3b.

The processor 200 controls the operation of the network interface 204.

The read only memory 202 contains instructions of the programs related to the algorithm as disclosed in the Figs. 3a and 3b, which are transferred, when the controller CTRL is powered on to the random access memory 203.

The controller CTRL is connected to the telecommunication network through the network interface 204. As example, the network interface 204 is a DSL (Digital Subscriber Line) modem, or an ISDN (Integrated Services Digital Network) interface, etc. Through such interface, the controller CTRL exchanges information with the access gateway AGW and the base stations BS20, BS30, BS1 to BS5 of the wireless cellular telecommunication network.

The network interface 204 comprises means for establishing a communication link between the controller CTRL and each base station BS1 to BS5 and means for establishing data paths with the access gateway AGW for each mobile terminal MT located in the virtual cell AR10.

**Figs. 3a** **and** **3b** depict an algorithm executed by the controller according to the present invention.

More precisely, the present algorithm is executed by the processor 200 of the controller CTRL.

At step S300, the processor 200 is informed of the reception of a message through the network interface 204.

At next step S301, the processor 200 checks if the received message is representative of a handover command message.

A handover command message is a message relayed by a base station BS which indicates that a mobile terminal MT which is currently under communication with a remote telecommunication device through the base station BS, intends to continue the communication through another base station BS. The handover command message comprises at least the identifier of the mobile terminal MT, the identifier of the cell AR of the base station BS though which the communication should continue, i.e. the target cell AR and the identifier of the cell AR of the base station BS though which the communication is currently going through, i.e. the origin cell AR.

If the message is a handover command message, the processor 200 moves to step S302. If the message is not a handover command message, the processor 200 moves to step S320.

At step S302, the processor 200 checks if the identifier of the target cell AR contained in the handover command message identifies one virtual cell AR10 managed by the controller CTRL.

If the identifier of the target cell AR contained in the handover command message does not identify one virtual cell AR10 managed by the controller CTRL, the processor 200 moves to step S313. Such case occurs when a mobile terminal MT located in the virtual cell AR10 is leaving the virtual cell AR10 and enters into another cell AR.

If the identifier of the target cell AR contained in the handover command message identifies one virtual cell AR10 managed by the controller CTRL, the processor 200 moves to step S303.

At step S303, the processor 200 checks if the identifier of the virtual cell AR10 determined at step S302 is same as the identifier of the origin cell AR. The origin cell AR is the cell AR the mobile terminal MT is leaving and is controlled by the base station BS which sent the message received at step S300.

If the identifier of the cell AR10 is not the identifier of the origin cell AR, the processor 200 moves to step S304.

According to the example of the Fig. 1, the mobile terminal MT1 is moving from the cell AR20 to the virtual cell AR10.

If the identifier of the cell AR10 is the identifier of the origin cell AR, the processor 200 moves to step 5316.

At step S304, the processor 200 determines a Cell Radio Network Temporary Identifier C-RNTI for the mobile terminal MT1 which is currently under communication with a remote telecommunication device through the base station BS which sent the handover command message received at step S300, i.e. the base station BS20, and which intends to continue the communication through one base station BS1 to BS5 which manages a cell AR1 to AR5 comprised in the virtual cell AR10.

The C-RNTI identities uniquely the mobile terminal MT1 in the virtual cell AR10 among other mobile terminals MT2, MT3 and MT4 which are located in the virtual cell AR10.

At next step S305, the processor 200 determines the radio bearer parameters for the mobile terminal MT1. The radio bearer parameters are, as example and in a non limitative way, related to the level of quality of service like the minimum and/or the average and/or maximum data rate, latency delay and/or data error rate.

At next step S306, the processor 200 determines, for the mobile terminal MT1, a set of base stations BS among the base stations BS1 to BS5 which manage respectively the cells AR1 to AR5 comprised in the virtual cell AR10.

The set of base stations BS is preferably determined according to mobility probabilities determined from previous handovers executed from the originating cell AR20 and the cells AR1 to AR5 and/or according to location information enabling the processor 200 to determine neighbour cells AR.

According to the example of the Fig. 1, the mobile terminal MT1 is moving from the cell AR20 to the virtual cell AR10. As the cells AR1 and AR4 are closed to the cell AR20, the probability that the mobile terminal MT1 is entering in the cells AR1 and AR4 is higher than the probability that the mobile terminal MT1 is entering in the cells AR2, AR3 and AR5. The set of base stations BS determined by the processor 200 comprises the base stations BS1 and BS4.

It has to be noted here that, in a variant, the set of base stations BS comprises all the base stations BS1 to BS5 which manage respectively the cells AR1 to AR5 comprised in the virtual cell AR10.

In has to be noted here that, the set of base stations BS is further reduced to the set of base station BS which is not overloaded.

A base station BS is, as example, overloaded when the number of mobile terminals MT, which arc already located in the cell AR of the base station BS or the quantity of information transferred or expected to be transferred by the base station BS exceeds a predetermined threshold.

In another implementation of the invention, the set of base stations BS is further reduced to the set of base stations BS for which the mobile terminal MT holds access rights. As example and in a non limitative way, the determined set of base stations BS contains only base stations BS which are owned by the owner of the mobile terminal MT.

As yet another example, the determined set of base stations BS also contains base stations BS not owned by the owner of the mobile terminal MT, but which access is opened to mobile terminals which have an allocated access right which is higher than or equal to a given threshold.

At next step S307, the processor 200 sets up a connection dedicated to the mobile terminal MT1 with each base station BS of the set of base stations BS determined at step S306.

The processor 200 sets up a connection dedicated to the mobile terminal MT1 on the link L1 with the base station BS1 and sets up a connection dedicated to the mobile terminal MT1 on the link L4 with the base station BS4.

At that step, each base station BS of the set of base stations BS is informed of the C-RNTI assigned to the mobile terminal MT and schedules autonomously for that C-RNTI, uplink resource for data to be transferred by the mobile terminal MT via the cell AR it manages.

At next step S308, the processor 200 commands the transfer of a handover response message to the base station BS which sent the message received at step S300. According to the example of the Fig. 1, the processor 200 commands the transfer of the handover response message to the base station BS which sent the handover command message received at step S300, i.e. the base station BS20.

The handover response message corresponds to an acknowledgement of the handover command message.

At the same step, the processor 200 sets a flag HO to the null value. The value of the flag HO is representative of the identification or not of the target cell AR of the mobile terminal MT1.

At next step S309, the processor 200 activates a timer T dedicated to the mobile terminal MT involved in the handover.

At next step S310, the processor 200 checks if a data path dedicated to the mobile terminal MT1 already exists between the controller CTRL and the access gateway AGW through the link L10.

If a data path dedicated to the mobile terminal MT1 already exists between the controller CTRL and the access gateway AGW, the processor 200 moves to step S311. Such case occurs when the controller CTRL controls plural different virtual cells AR and when the mobile terminal MT is moving from one other virtual cell AR to the virtual cell AR10. In such case, two C-RNTI have successively been allocated to the mobile terminal MT. Prior to receiving the message at step S300, a first C-RNTI was allocated at the time the mobile terminal MT entered in the other virtual cell AR or when the mobile terminal MT became active in the other virtual cell AR. A second C-RNTI was allocated at step S304, after receiving the handover command message informing that the mobile terminal MT has entered the virtual cell AR10.

If no data path already exists between the controller CTRL and the access gateway AGW for the mobile terminal MT, the processor 200 moves to step S312.

At step S311, the processor 200 sets the first C-RNTI as available for other allocation. Only one C-RNTI is then allocated to the mobile terminal MT. In a variant, the first C-RNTI is set as available only after handover is fully completed and data is received from the mobile terminal at step S330.

After that, the processor 200 returns to step S300 and waits for the reception of a new message.

At step S312, the processor 200 commands the establishment of a data path dedicated to the mobile terminal MT1 between the controller CTRL and the access gateway AGW. A data path is established for each mobile terminal MT, which is located in the virtual cell AR10.

After that, the processor 200 returns to step S300 and waits for the reception of a new message.

At step S313, the processor 200 identifies the base station BS, which manages the cell AR in which the mobile terminal MT is entering, using the identifier of the target cell AR comprised in the message received at step S300.

According to the example of the Fig. 1, the mobile terminal MT3 is moving from the virtual cell AR10 to the cell AR30. The processor 200 identifies then the base station BS30.

At next step S314, the processor 200 commands the transfer of the handover command message to the base station BS30 identified at step S313.

After that, the processor 200 returns to step S300 and waits for the reception of a new message.

At next step S316, the processor 200 determines, for the mobile terminal MT concerned by the handover, a set of base stations BS among the base stations BS1 to BS5 which manage respectively the cells AR1 to AR5 comprised in the virtual cell AR10.

According to the example of the Fig. 1, a handover is needed for the mobile terminal MT2 within the virtual cell AR10. The mobile terminal MT2 is moving from the cell AR5 to the cell AR4.

As the base stations BS1 to BS5 transfer the same common signal, i.e. signal representative of the same identifier of cell AR, when a mobile terminal MT is located in the area AR10, the mobile terminal MT can not identify, using the identifier of the cells AR1 to AR5 transferred in the Broadcast Control Channel, in which cell AR1 to AR5 the mobile terminal MT is located.

According to the invention, by monitoring the power levels of the signal representative of data and of the common signal, it is possible to distinguish if a handover needs to bc executed for the mobile terminal MT.

When the mobile terminal MT2 is moving away from the base station BS5, the power level of the common signal transferred by the base station BS5 and received by the mobile terminal MT2 decreases and the power level of the data signal transferred and/or received by the base station BS5 decreases.

When the mobile terminal MT2 is approaching the base station BS4, i.e. enters in the cell AR4, the power level of the common signal transferred by the base station BS4 and received by the mobile terminal MT2 increases and the power level of the data signal transferred and/or received by the base station BS5 decreases as the mobile terminal MT2 is still involved into a communication with a remote telecommunication device through the base station BS5.

The difference of variations of power levels of common signal and of data signal can then be used for determining if a handover needs to be executed for the mobile terminal MT2.

When a handover needs to be executed for the mobile terminal MT2, a message is transferred to the controller CTRL.

As the identifiers of the cells AR1 to AR5 are identical, the controller CTRL is not able to determine if the mobile terminal MT2 is moving from the cell AR5 to the cell AR4 or if the mobile terminal MT2 is moving from the cell AR5 to the cell AR3.

As the cells AR3 and AR4 are closed to the cell AR5, the probability that the mobile terminal MT2 is entering in the cells AR3 and AR4 is higher than the probability that the mobile terminal MT2 is entering in the cells AR1 and AR2. The set of base stations BS, determined by the processor 200, comprises the base stations BS3 and BS4.

It has to be noted here that, in a variant, the set of base stations BS comprises all the base stations BS1 to BS5 which manage respectively the cells AR1 to AR5 comprised in the virtual cell AR10.

It has to be noted here that, the set of base stations BS is further reduced to the set of base station BS which is not overloaded.

A base station BS is, as example, overloaded when the number of mobile terminals MT, which are already located in the cell AR of the base station BS or the quantity of information transferred or expected to be transferred by the base station BS, exceeds a predetermined threshold.

In another implementation of the invention, the set of base stations BS is further reduced to the set of base stations BS for which the mobile terminal MT holds access rights. As example and in a non limitative way, the determined set of base stations BS contains only base stations BS which are owned by the owner of the mobile terminal MT.

As yet another example, the determined set of base stations BS also contains base stations BS not owned by the owner of the mobile terminal MT, but which access is opened to mobile terminals which have an allocated access right which is higher than or equal to a given threshold.

At next step S317, the processor 200 sets up a connection with each base station BS of the set of base stations BS.

The processor 200 sets up a connection dedicated to the mobilc terminal MT2 on the link L3 with the base station BS3 and sets up a connection dedicated to the mobile terminal MT2 on the link L4 with the base station BS4.

At next step S318, the processor 200 commands the transfer of a handover response message to the base station BS which sent the message received at step S300 According to the example of the Fig. 1, the processor 200 commands the transfer of the handover response message to the base station BS which sent the handover command message received at step S300, i.e. the base station BS5.

The handover response message corresponds to an acknowledgement of the handover command message.

At the same step, the processor 200 sets the flag HO to the null value.

At next step S319, the processor 200 activates a timer T dedicated to the mobile terminal MT involved in the handover.

After that, the processor 200 returns to step S300 and waits for the reception of a new message.

At step S320, the processor 200 checks if the received message comprises data to be transferred to a mobile terminal MT located in the virtual cell AR10.

If the received message comprises data to be transferred to a mobile terminal MT, the processor 200 moves to step S321. Otherwise, the processor 200 moves to step S330 of the Fig. 3b.

At step S321, the processor 200 commands the transfer of the data to each base station BS identified in the set of base stations BS for the mobile terminal MT through the connections dedicated to the mobile terminal MT.

After that, the processor 200 returns to step S300 and waits for the reception of a new message.

As example, the data are for the mobile terminal MT1. The processor 200 commands the transfer of the data to the base stations BS1 and BS4 identified in the set of base stations BS for the mobile terminal MT1 through the connections dedicated to the mobile terminal MT1.

At step S330 of the Fig. 3b, the processor 200 checks if the message comprises data transferred by a mobile terminal MT through a base station BS1 to BS5.

If the message comprises data transferred by one mobile terminal MT, the processor 200 moves to step 5331. Otherwise, the processor 200 moves to step S340.

At step S331, the processor 200 commands the transfer of the data to the access gateway AGW through the data path dedicated to the mobile terminal MT which transferred the data.

If the mobile terminal MT1 is the mobile terminal which transfers data, the processor 200 is able to determine in which cell AR the mobile terminal MT1 is located as the base station B81 which transferred the message can be identified.

If the mobile terminal MT2 is the mobile terminal which transfers data, the processor 200 is able to determine in which cell AR the mobile terminal MT2 is located as the base station BS4 which transferred the message can be identified.

At next step S332, the processor 200 checks if the timer T dedicated to the mobile terminal MT involved in the handover is expired.

If the timer T dedicated to the mobile terminal MT involved in the handover is not expired, the processor 200 moves to step S339 and memorizes the identifier of the base station BS through which the message comprising data has been transferred by the mobile terminal MT.

After that, the processor 200 returns to step S300 and waits for the reception of a new message.

If the timer T dedicated to the mobile terminal MT, involved in the handover is expired, the processor 200 moves to step S333.

It has to he noted here, that in another mode of realisation, the present algorithm doesn't comprise the steps S309, S319, S332 and S339.

At next step S333, the processor 200 checks if the value of the flag HO is equal to null value.

If the value of the flag HO is equal to null value, the processor 200 moves to step S334. If the value of the flag HO is equal to one, the processor 200 returns to step S300 and waits for the reception of a new message.

At step S334, the processor 200 selects one base station BS from the base stations of which the identifier is memorized at step S339 according to a criterion.

In one implementation of the invention, the processor 200 selects the base station BS which transferred the message first among the base stations BS which transferred data from the mobile terminal MT.

In another implementation of the invention, the processor 200 selects the base station BS which transferred the message with best reported radio quality among the base stations BS which transferred data from the mobile terminal MT.

In yet another implementation of the invention, the processor 200 selects the base station BS which transferred the message which is less loaded among the base stations BS which transferred data from the mobile terminal MT.

It has to be noted here that in, when the present algorithm doesn't comprise the steps S309, S319, S332 and S339, the processor doesn't execute the step S334. In such case, the first base station BS which transferred the message if plural base stations BS transfer the message is determined as the base station BS which manages the cell AR in which the mobile terminal MT is located.

At step S335, the processor 200 updates mobility probabilities related to handovers between the cells AR of the base station BS through which the message comprising data has been transferred by the mobile terminal MT and the origin base station BS.

If the mobile terminal MT1 is the mobile terminal MT which transfers data, the processor 200 updates mobility probabilities related to handovers between the cells AR20 and AR1.

If the mobile terminal MT2 is the mobile terminal MT which transfers data, the processor 200 updates mobility probabilities related to handovers between the cell AR4 and AR5.

At next step S336, the processor 200 limits the set of base stations BS for the mobile terminal MT which transfers data to the base station BS which transferred the message.

If the mobile terminal MT1 is the mobile terminal MT which transfers data, the processor 200 limits the set of base stations BS for the mobile terminal MT1 to the base station BS1.

If the mobile terminal MT2 is the mobile terminal MT which transfers data, the processor 200 limits the set of base stations BS for the mobile terminal MT2 to the base station BS4.

At next step S337, the processor 200 releases each connection dedicated to the mobile terminal MT which transfers data with the base station or base stations BS which is or are no more included in the set of base stations BS for the mobile terminal MT which transfers data.

If the mobile terminal MT1 is the mobile terminal MT which transfers data, the processor 200 releases the connection dedicated to the mobilc terminal MT1 on the link L4 with the base station BS4.

If the mobile terminal MT2 is the mobile terminal MT which transfers data, the processor 200 releases the connection dedicated to the mobile terminal MT2 on the link L3 with the base station BS3.

At next step S338, the processor 200 sets the value of the flag HO to the value one.

After that, the processor 200 returns to step S300 and waits for the reception of a new message.

At step S340, the processor 200 checks if the received message comprises information indicating that a mobile terminal MT comprised in the virtual cell AR10 enters in an active mode.

A mobile terminal MT is active when it intends to establish a communication with a remote telecommunication device through the wireless cellular telecommunication network.

If the received message comprises information indicating that a mobile terminal MT comprised in the virtual cell AR10 enters in an active mode, the processor 200 moves to step S341. Otherwise, the processor 200 moves to step S350.

As example, the mobile terminal MT4 of the Fig. 1 becomes active in the cell AR2 of the base station BS2.

At step S341, the processor 200 determines a Cell Radio Network Temporary Identifier C-RNTI for the mobile terminal MT4.

At next step S342, the processor 200 determines the radio bearer parameters for the mobile terminal MT4.

At next step S343, the processor 200 sets up a connection dedicated to the mobile terminal MT4 on the link L2 with the base station BS2 which has transferred the message.

At next step S344, the processor 200 commands the establishment of a data path dedicated to the mobile terminal MT1 between the controller CTRL and the access gateway AGW.

After that, the processor 200 returns to step S300 and waits for the reception of a new message.

At step S350, the processor 200 checks if the received message is a handover response message.

If the received message is a handover response message, the processor 200 moves to step S351. Otherwise, the processor 200 moves to step S355.

At step S355, the processor 200 checks if the received message comprises information indicating that a mobile terminal MT located in the virtual cell AR10 enters in an idle mode.

A mobile terminal MT is idle when it is not involved in any communication with a remote telecommunication device through the wireless cellular telecommunication network.

If the received message comprises information indicating that a mobile terminal MT located in the virtual cell AR10 enters in an idle mode, the processor 200 moves to step S352. Otherwise, the processor 200 returns to step S300 and waits for the reception of a new message.

According to the Fig. 1, the mobile terminal MT3 is moving from the cell AR4 to the cell AR30. The base station BS30 transfers a handover response message in response to the handover command message transferred by the controller CTRL at step S314 of the Fig. 3a.

At next step S351, the processor 200 identifies the mobile terminal MT for which the handover response message is transferred, i.e. the mobile terminal MT3 or identifies the mobile terminal MT which enters into idle mode. The processor 200 identifies the mobile terminal MT by reading the old C-RNTI comprised in the received message. Then, the processor 200 commands at the same step the transfer to the mobile terminal MT of a handover command message, informing the mobile terminal MT to handover to the target cell AR, and comprises the new C-RNTI assigned by the base station BS which sent the message received at step S300, and comprised in the received handover response message. The mobile terminal MT can now detect the grant of uplink resource for that C-RNT1 in the target cell AR, for the transmission of data via the target cell AR.

At next step S352, the processor 200 commands the release of each connection dedicated to the mobile terminal MT3 with the base station or base stations BS which is or are comprised in the set of base stations BS for the mobile terminal MT3 or the processor 200 commands the release of each connection dedicated to the mobile terminal MT which enters into idle mode with the base station or base stations BS which is or are comprised in the set of base stations BS for the mobile terminal MT which enters into idle mode.

At next step S353, the processor 200 commands the release of the data path dedicated to the mobile terminal MT3 between the controller CTRL and the access gateway AGW or the release of the data path dedicated to the mobile terminal MT which enters into idle mode between the controller CTRL and the access gateway AGW.

At next step S354, the processor 200 sets the C-RNTI allocated to the mobile terminal MT3 or to the mobile terminal MT which enters into idle mode as available.

After that, the processor 200 returns to step S300 and waits for the reception of a new message.

Naturally, many modifications can be made to the embodiments of the invention described above without departing from the scope of the present invention.

## Claims

1. Method for enabling the determination of a cell in which a mobile terminal is located among a group of cells of a wireless cellular telecommunication network, each cell of a group of cells being managed by a base station, **characterised in that** the method comprises the steps of:
- detecting the presence of the mobile terminal in the group of cells,
- enabling the mobile terminal to transfer data to at least a part of the base stations which manage a cell of the group of cells,
- receiving data from the mobile terminal through one base station which manages one cell of the group of cells,
- determining the cell managed by the base station through which the data are received as the cell in which the mobile terminal is located.

2. Method according to claim 1, **characterised in that** data are received from the mobile terminal through plural base stations and the method comprises further step of selecting, according to a criterion, one base station among the plural base stations through which data are received as the base station which manages the cell in which the mobile terminal is located.

3. Method according to claim 1 or 2, **characterised in that** each base station managing a cell of the group of cells transfers in the cell the base station manages a signal representative of an information identifying the same cell.

4. Method according to any of the claims 1 to 3, **characterised in that** the base stations managing cells of the group of cells are associated to a controller and **in that** the method is executed by the controller.

5. Method according to claim 4, **characterised in that** the mobile terminal is detected by receiving a handover command message from another base station which manages one cell which does not belong to the group of cells and **in that** the message comprises the information identifying the cell transferred in each cell of the group of cells.

6. Method according to claim 5, **characterised in that** the method comprises further steps of:
- determining a set of base stations which manage cells of the group of cells,
- transferring data intended for the mobile terminal to each base station of the set of base stations,
and **in that** the base station through which data are received from the mobile terminal is one base station of the set of base stations.

7. Method according to claim 6, **characterised in that** the set of base stations is determined according to a mobility probability between the cell managed by the other base station and each cell in the group of cells, the value of the mobility probability being computed from previous handovers executed from the other base station and the cells of the group of cells and/or according to location information of the cell managed by the other base station which transferred the handover command message and cells of the group of cells.

8. Method according to claim 7, **characterised in that** the set of base stations is determined according to the access rights of the mobile terminal on each base station managing a cell of the group of cells.

9. Method according to any of the claims 1 to 8, **characterised in that** the mobile terminal is enabled to transfer data to at least a part of the base stations which manage a cell of the group of cells by allocating an available identifier to the mobile terminal which uniquely identifies the mobile terminal in at least the group of cells.

10. Method according to claim 9, **characterised in that** the mobile terminal is enabled to transfer data to at least a part of the base stations which manage a cell of the group of cells by:
- setting up a connection for the mobile terminal with each base station of the set of base stations,
- setting up a connection for the mobile terminal with an access gateway,
- transferring a handover response message to the base station which transferred the handover command message.

11. Method according to claim 10, **characterised in that** when data are received from the mobile terminal through the base station, the method further comprises the steps of :
- updating at least one mobility probability value,
- releasing the connection for the mobile terminal with at least one base station of the set of base stations, the at least one base station being a base station through which data are not received from the mobile terminal.

12. Method according to claim 11, **characterised in that** the method further comprises the steps of:
- receiving a message from the mobile terminal through the base station which manages the cell in which the mobile terminal is located, the message indicating that the mobile terminal is entering in an idle mode,
- releasing the connection for the mobile terminal with at least the base station through which the message is transferred by the mobile terminal,
- releasing the a connection for the mobile terminal with the access gateway,
- setting the identifier, allocated to the mobile terminal, as available.

13. Method according to claim 12 **characterised in that** the method further comprises the steps of:
- receiving a message from the base station which manages the cell in which the mobile terminal is located, the message indicating that the mobile terminal is moving to a cell which does not belong to the group of cells,
- transferring a handover command message to the base station which manages the cell which does not belong to the group of cells,
- releasing the connection for the mobile terminal with at least the base station which transferred the message indicating that the mobile terminal is moving to the cell which does not belong to the group of cells,
- releasing the connection for the mobile terminal with the access gateway,
- setting the identifier allocated to the mobile terminal as available.

14. Method according to claim 13, **characterised in that** the method further comprises the steps of:
- receiving a message from the base station which manages the cell in which the mobile terminal is located, the message indicating that the mobile terminal is moving to a cell which belongs to the group of cells,
- determining another set of base stations which manage cells of the group of cells,
- transferring data intended for the mobile terminal to each base station of the other set of base stations,
- receiving other data from the mobile terminal through one base station of the other set of base stations,
- determining the cell managed by the base station through which the other data are received as the cell in which the mobile terminal is located.

15. Method according to claim 1, **characterised in that** the mobile terminal is detected by receiving a message from the base station which manages a cell of the group of cells, the message comprising information indicating that the mobile terminal enters in an active mode in one cell of the group of cell.

16. Method according to claim 15, **characterised in that** the mobile terminal is enabled to transfer data to at least a part of the base stations which manage a cell of the group of cells by allocating an available identifier to the mobile terminal which uniquely identifies the mobile terminal in at least the group of cells.

17. Method according to claim 16, **characterised in that** the mobilc terminal is enabled to transfer data to at least a part of the base stations which manage a cell of the group of cells by:
- setting up a connection for the mobile terminal with the base station which transferred the message,
- setting up a connection for the mobile terminal with an access gateway.

18. Device for enabling the determination of a cell in which a mobile terminal is located among a group of cells of a wireless cellular telecommunication network, each cell of a group of cells being managed by a base station, **characterised in that** the device for enabling the determination of a cell comprises:
- means for detecting the presence of the mobile terminal in the group of cells,
- means for enabling the mobile terminal to transfer data to at least a part of the base stations which manage a cell of the group of cells,
- means for receiving data from the mobile terminal through one base station which manages one cell of the group of cells,
- means for determining the cell managed by the base station through which the data are received as the cell in which the mobile terminal is located.

19. Computer program which can be directly loadable into a programmable device, comprising instructions or portions of code for implementing the steps of the method according to claims 1 to 17, when said computer program is executed on a programmable device.
